# EUROPEAN PATENT APPLICATION

(11) **EP 2 468 824 A1**
(43) Date of publication of application: **27.06.2012**
(21) Application number: 10810061.1
(22) Date of filing: 19.08.2010
(51) Int. Cl.: C09D 5/00, C08J 7/04, C09D 7/12, C09D 183/06, C10M 103/02, C10M 103/06, C10M 107/02, C10M 107/28, C10M 107/44, C10M 107/50, B32B 27/00, C10N 30/00, C10N 40/00

(54) **COATING COMPOSITION FOR SLIDING MEMBERS**

(30) Priority: 21.08.2009 JP 2009192580
(71) Applicant: Dow Corning Toray Co., Ltd., Tokyo 1000005 (JP)
(72) Inventor: YAMAGUCHI, Tetsuji, Kanagawa 258-0122 (JP); SASAKI, Takahiko, Kanagawa 258-0122 (JP)
(74) Representative: Earnshaw, Geoffrey Mark
(86) International application number: PCT/JP2010/064434
(87) International publication number: WO 2011/021725

(57) **Abstract**

A coating composition for a sliding member, wherein from 30 to 120 parts by weight of a solid lubricant and from 5 to 80 parts by weight of a silicone resin are included per 100 parts by weight of a film-forming organic resin. As a result of forming the film on the surface of the sliding member, a coating composition for a sliding member is provided whereby low frictional drag can be maintained for an extended period of time, and the sticking of the sliding member to glass surfaces and similar smooth surfaces can be prevented.

## Description

### TECHNICAL FIELD

The present invention relates to a coating composition for a sliding member, and particularly relates to a coating composition for a sliding member whereby low frictional friction can be maintained for an extended period of time, and sticking of the sliding member to glass surfaces and similar smooth surfaces can be prevented, by forming a film on the sliding member surface.

### BACKGROUND ART

Coating compositions are known that include a solid lubricant in order to enhance the sliding characteristics of a base material surface. However, in many cases, enhancements of sliding characteristics have been insufficient with regards to sliding members constituted by rubber or plastic. Thus, a resin coating material including a resin, a solid lubricant, and silicone-rubber particles has been proposed for the purpose of further enhancing sliding characteristics (Japanese Unexamined Patent Application Publication H08-048800).

### Prior Art Documents

### Patent Documents

Patent Document 1: Japanese Unexamined Patent Application Publication H08-048800

### DISCLOSURE OF THE INVENTION

However, when using an organic resin that forms a pliable film as a binder in an effort to enhance the followability to rubber, soft plastic, or a similar flexible base material, problems were discovered, namely that a sliding member coated with a coating composition such as that described above easily sticks to glass and similar smooth surfaces, and that the coefficient of friction at sliding initiation increases.

An object of the present invention is to provide a coating composition for a sliding member whereby low frictional drag can be maintained for an extended period of time and sticking of the sliding member to glass surfaces and similar smooth surfaces can be prevented, by forming a film on the sliding member surface.

The present invention relates to a coating composition for a sliding member comprising a film-forming organic resin, a solid lubricant, and a silicone resin. Preferably, from 30 to 120 parts by weight of the solid lubricant and from 5 to 80 parts by weight of the silicone resin are included per 100 parts by weight of the film-forming organic resin. A weight ratio of the silicone resin to the solid lubricant is preferably in a range from 0.1 to 0.8.

The film-forming organic resin, when in the form of an organic resin film having a thickness from 20 to 30 µm and a width of 10 mm, preferably has a breaking elongation at a pulling speed of 10 mm/minute of not less than 100%.

Preferably, the silicone resin has from 0.05 wt.% to 15 wt.% of silicon-bonded hydroxyl groups, and more preferably, the silicone resin is a silicone resin powder that does not have a softening point. Additionally, the sliding member, which is a base material, is preferably rubber.

The present invention also relates to a coated body provided with a coating film comprising the coating composition for a sliding member described above on a surface thereof. Additionally, the coated body is preferably a rubber member.

By forming the coating composition of the present invention on a sliding member surface as a film, low frictional drag can be maintained for an extended period of time and sticking of the sliding member to glass surfaces and similar smooth surfaces can be prevented. Additionally, the film formed by curing the coating composition of the present invention has excellent flexibility. Thus, even when the film is formed on rubber or a similar flexible base material, the film can follow deformations of the base material without film defects such as peeling, cracking, and the like occurring.

### DETAILED DESCRIPTION OF THE INVENTION

The film-forming organic resin used in the coating composition of the present invention is not particularly limited, and examples thereof include alkyd resins, polyacrylic resins, polymethacrylic resins, polyurethane resins, epoxy resins, phenolic resins, polyolefin resins, polyamide resins, polyamide imide resins, and other commercially available organic resins. Among these, film-forming organic resin compositions having alkyd resins, polyacrylic resins, polyurethane resins, epoxy resins, polyolefin resins, or the like as a main component can be suitably used, and film-forming polyurethane resin compositions, film-forming polyacrylic resin compositions, and film-forming polyolefin resin compositions are particularly preferable. A single film-forming organic resin can be used or, as necessary, a combination of two or more film-forming organic resins can be used.

As necessary, the film-forming polyurethane resin composition may be used in combination with a polyisocyanate, polyamidoamine, aliphatic polyamine, cycloaliphatic polyamine, cycloaliphatic diamine, tertiary amine, carbodiimide, or similar crosslinking agent.

Examples of preferable film-forming polyurethane resin compositions include the Sancure® series (manufactured by Lubrizol Corporation); the Superflex series (manufactured by Dai-ichi Kogyo Seiyaku Co., Ltd.); the Adeka BONTIGHTER HUXseries (manufactured by Adeka Corporation); the VONDIC series and the HYDRAN HW series (manufactured by DIC Corporation); the NeoRez series (manufactured by Royal DSM N.V.); the Takelac™ W series and Takelac™ WS series (manufactured by Mitsui Chemicals, Inc.); the UCOAT series (manufactured by Sanyo Chemical Industries, Ltd.); the WBR series and the WEM series (manufactured by Taisei Fine Chemical Co., Ltd.); and similar water-based film-forming polyurethane emulsions. These film-forming polyurethane resin compositions can, for example, be used in combination with the Takenate™ WD series (manufactured by Mitsui Chemicals, Inc.) or the Carbodilite crosslinking agent series (manufactured by Nisshinbo Holdings Inc.).

Solvent-based film-forming polyurethane compositions are also suitable, and commercially available examples thereof include combinations of the Nippollan series and the Coronate crosslinking agent series (manufactured by Nippon Polyurethane Industry Co., Ltd.), and combinations of the Adeka BONTIGHTER F series and the HARDENER crosslinking agent series (manufactured by Adeka Corporation).

Examples of preferable film-forming polyacrylic resin compositions include the VONCOAT series (manufactured by DIC Corporation); the Polysol AP series and the Polysol AM series (manufactured by Showa Denko K.K.); the Aquabrid series (manufactured by Daicel Finechem Ltd.); the Acryset ARL series, the Acryset EMN series, the Acryset EX series, the Acryset SZ series, and the UW E series (manufactured by Nippon Shokubai Co., Ltd.); the Yodosol series and the Cannabinol series (manufactured by Nippon NSC Co. Ltd.); the Polytron™ series and the Polydurex™ series (manufactured by Asahi Kasei Chemicals Corporation); the Rikabond ES series (commercially available products manufactured by CSC Co., Ltd.); the Primal™ series (commercially available products manufactured by Rohm and Haas Company Japan Co., Ltd.); the Acronal® series (manufactured by BASF Japan Co., Ltd.); Movinyl (commercially available product manufactured by Nichigo-Movinyl Co., Ltd.); Kaneka Gemlac™ and Kanevilack™ (commercially available products manufactured by Kaneka Corporation); the SE series, UW series, RKW series, and AKW series (manufactured by Taisei Fine Chemical Co., Ltd.); and similar water-based film-forming acrylic resin emulsions.

Examples of preferable film-forming polyolefin resin compositions include the ARROWBASE® series (manufactured by Unitika Ltd.); the HARDLEN® series (manufactured by Toyobo Co., Ltd.); the Hitec S series (manufactured by Toho Chemical Industry Co., Ltd.); and similar water-based film-forming non-chlorinated polyolefin emulsions.

A breaking elongation of the organic resin film obtained from the film-forming organic resin is preferably not less than 100% and more preferably not less than 200%. A reason for this is because when the base material (sliding member) is rubber or a similar flexible material, the film can follow deformations of the base material, and peeling, cracking, and other defects of the cover film can be prevented. Note that the breaking elongation of the organic resin film is measured by forming the film-forming organic resin into an organic resin film having a thickness from 20 to 30 µm and a width of 10 mm, and pulling at a pulling speed of 10 mm/minute.

A conventionally known solid lubricant can be used as the solid lubricant, and preferable examples thereof include molybdenum disulfide, tungsten disulfide, graphite, PTFE (polytetrafluoroethylene), and the like. The particle diameter of the solid lubricant, as a median diameter measured using a laser diffraction/scattering type particle size distribution, is preferably in a range from 0.1 to 30 µm and more preferably from 0.2 to 20 µm. This is because if the particle diameter of the solid lubricant is less than the lower limit of the range described above, excellent lubrication durability may not be obtained; and if the particle diameter exceeds the upper limit of the range described above, the surface roughness of the film obtained by curing the coating composition of the present invention will increase and the film may become prone to wearing when sliding.

The solid lubricant is preferably a graphite. Examples of the graphite include both natural graphites and artificial graphites, and particles thereof may be squamous, scale-like, or soil-like. Among these, squamous graphite is preferable. Examples of the squamous graphite that can be preferably used include J-CPB, ACP-1000, and CSP-E (manufactured by Nippon Graphite Industries, Ltd.); UF2 and UF-4 (manufactured by Graphit Kropfmuehl); BF-10A (manufactured by Fuji Kokuen Co., Ltd.); and the like. Examples of the molybdenum disulfide include Technical Fine (manufactured by Climax Molybdenum GmbH) and UP-15 (manufactured by Placer Dome Inc.); and examples of the PTFE include L-5 (manufactured by Daikin Industries Ltd.), TF9205 (manufactured by Dyneon), and KTL-8F (manufactured by Kitamura Limited).

A compounded amount of the solid lubricant is preferably in a range of 30 to 120 parts by weight and more preferably in a range of 50 to 100 parts by weight per 100 parts by weight of the film-forming organic resin. This is because if the compounded amount of the solid lubricant is less than the lower limit of the range described above, sufficient lubrication characteristics may not be obtained; and if the compounded amount of the solid lubricant exceeds the upper limit of the range described above, adhesion of the coating composition of the present invention to the base material may decline and/or the uniformity of the film obtained by curing the coating composition of the present invention may be damaged.

The silicone resin is a polyorganosiloxane having a crosslinked structure with a three-dimensional network form that has not less than 50 mol% and preferably not less than 70 mol% of branched siloxane units selected from siloxane units expressed by R¹SiO_{3/2} or SiO_{4/2}. The silicone resin may include siloxane units expressed by R¹₂SiO_{2/2} and siloxane units expressed by R¹₃SiO_{1/2}.

When using a polyorganosiloxane having less than 50 mol% of branched siloxane units selected from siloxane units expressed by R¹SiO_{3/2} or SiO_{4/2} in place of the silicone resin described above or, more specifically, when using a polydiorganosiloxane constituted by siloxane units expressed by R¹₂SiO_{2/2} and siloxane units expressed by R¹₃SiO_{1/2} and a crosslinked product thereof in place of the silicone resin described above, it was discovered that the sliding member on which such a coating composition is applied stuck to glass and similar smooth surfaces.

Examples of R¹ in this formula include independent monovalent hydrocarbon groups having from 1 to 20 carbons, alkyl groups having from 1 to 20 carbons, aryl groups having from 6 to 20 carbons, aralkyl groups having from 7 to 20 carbons, and alkenyl groups having from 2 to 20 carbons. Part or all of the carbon-bonded hydrogen atoms of the monovalent hydrocarbon groups may be substituted monovalent hydrocarbon groups having from 1 to 20 carbons, substituted with halogen atoms, amino groups, epoxy groups, acryloxy groups, methacryloxy groups, mercapto groups, cyano groups, and the like. Among these, alkyl groups, fluoroalkyl groups, and aryl groups are preferable, and methyl groups and phenyl groups are more preferable. Moreover, the silicone resin preferably has, on average, from 0.05 to 15 wt.%, and more preferably from 0.5 to 10 wt.% of silicon-bonded hydroxyl groups.

The silicone resin may be a solid or a liquid at 25°C, and may or may not have a softening temperature. However, the silicone resin preferably is a solid at 25°C and does not have a softening point. From the perspective of dispersibility, when the silicone resin is a silicone resin powder that is a solid at 25°C and that does not have a softening point, a median diameter measured using a laser diffraction/scattering type particle size distribution is preferably in a range from 0.1 to 30 µm and more preferably from 0.2 to 20 µm. The form of the silicone resin powder is not particularly limited and may be flake-like, irregular shape, or spherical.

A compounded amount of the silicone resin is not particularly limited, but from the perspectives of uniformity of the film obtained from the coating composition of the present invention and sticking to glass and similar smooth surfaces, is preferably from 5 to 80 parts by weight and more preferably from 10 to 40 parts by weight per 100 parts by weight of the film-forming organic resin. Additionally, a compounding ratio of the silicone resin with respect to the solid lubricant is not particularly limited, but from the perspectives of uniformity of the film obtained from the coating composition of the present invention and sticking to glass and similar smooth surfaces, is preferably from 0.1 to 0.8 and more preferably from 0.3 to 0.6 with respect to 1 of the solid lubricant.

Examples of sliding members to which the coating composition of the present invention can be applied include sliding members constituted by natural rubber, styrenebutadiene rubber, chloroprene rubber, nitrile rubber, EPDM (ethylene propylene diene dimer), ethylene propylene rubber, mixtures thereof, and similar rubbers; vinyl chloride, polyurethane, polyamide, mixtures thereof, and similar thermoplastic resins; and similar materials.

The coating composition of the present invention can be formed by diluting the film-forming organic resin with an appropriate solvent, and then dispersing and mixing the solid lubricant and the silicone resin. A bead mill or the like may be used to more finely disperse the solid lubricant and/or the silicone resin. Moreover, fillers, surfactants, thickening agents, preservatives, and the like may be compounded to the extent that the object of the present invention is not obstructed.

A lubricating coating film can be formed by applying the coating composition of the present invention to the sliding member by spray coating, dipping, roll coating, knife coating, brush coating, or the like, and thereafter drying to form a film. The drying and film forming may be conducted by heat treating in a temperature range of about 70 to 180°C. A thickness of the coating after the film forming is not particularly limited, but from the perspectives of wear resistance, and followability to the sliding member, is preferably from 2 to 20 µm and more preferably from 5 to 10 µm.

### EXAMPLES

Hereinafter, the present invention will be described in detail using Practical Examples and Comparative Examples, but the present invention is not limited to these Practical Examples and Comparative Examples. In the Practical Examples, "parts" are defined as parts by weight, "percentages (%)" are defined as wt.%, and "viscosity" is defined as a measurement taken at 25°C.

Methods for evaluating the examples are described below.

### Evaluation of the uniformity of the coating composition

The maximum particle diameter of the particles in the obtained coating composition was measured in accordance with JIS 5600-2-5. The coating composition was applied via knife coating at a particle gauge of 100 µm and dried for 10 minutes at 80°C. Then, the particles of the film surface were visually observed. Cases where only particles having diameters of less than 20 µm were found were considered "passing", and cases where particles were found having diameters of 20 µm or greater were considered "failing".

### Sliding friction test

The coating compositions of the Practical Examples and the Comparative Examples were applied to chloroprene rubber sheets and EPDM rubber sheets (thickness: 2 mm) by spraying so that a film thickness would be 10 µm. The coating compositions using a film-forming water-based emulsion were allowed to sit at rest for 30 minutes at 80°C and the coating compositions using a solvent-based film-forming composition were allowed to sit at rest for 30 minutes at 120°C. Thereafter, each was allowed to sit at room temperature for not less than 24 hours. Thus, samples for the friction test were prepared. Using a reciprocating tester, the samples were tested for the coefficients of dynamic friction after 1,000 slides with respect to a 1/2 inch steel ball, a polyacetal (POM) ball, and a glass ball, and whether or not stick-slip occurred. Testing conditions were as follows: Sliding speed: 0.04 m/s; Load: 50 g; Sliding distance (stroke): 40 mm.

### Evaluation of sticking to glass

The coating compositions were applied on polyester films by knife coating. The coating compositions using a film-forming water-based emulsion were allowed to sit at rest for 30 minutes at 80°C and the coating compositions using a solvent-based film-forming composition were allowed to sit at rest for 30 minutes at 120°C. Thereafter, each was allowed to sit at room temperature for not less than 24 hours. Then, samples where the coating compositions were applied on polyester film surfaces were obtained by cutting out squares with a length and width of 1 cm. Each of the obtained samples was placed on a glass plate surface so that the coated face was in contact with the glass plate surface, and was allowed to sit for one hour in a 60°C atmosphere while applying a load of 100 g. Then, the glass plate was returned to room temperature and the 100 g load was removed. Thereafter, a weight of 5 g was attached to the sample and allowed to sit at room temperature for five minutes. Then, the glass plate was stood up so as to be vertical, and the time required for the sample and the 5 g weight to peel from the glass surface was measured. Cases where the sample peeled from the glass plate surface within 60 seconds were considered "passing".

### Sliding durability test with respect to glass ball

The coating compositions were applied to EPDM rubber sheets (thickness: 2 mm) by spraying so that a film thickness would be 10 µm, were allowed to sit at rest for 30 minutes at 80°C and, thereafter, were allowed to sit at room temperature for not less than 24 hours. Thus, samples were prepared. Using a reciprocating tester, the prepared samples were tested for the coefficient of dynamic friction after 10,000 slides with respect to a glass ball, and whether or not stick-slip occurred. Testing conditions were as follows: Sliding speed: 0.08 m/s; Load: 200 g; Sliding distance (stroke): 60 mm. Moreover, after the test, the sliding site of the sample was examined using a microscope as to whether or not the film had peeled.

### Evaluation of flexibility of the film-forming organic resin

Each film-forming organic resin composition was applied to a chloroprene rubber sheet (thickness: 2 mm) by knife coating so that a film thickness would be 10 µm. The film-forming aqueous polyurethane emulsions were allowed to sit at rest for 30 minutes at 80°C and the solvent-based film-forming polyurethane compositions were allowed to sit at rest for 30 minutes at 120°C. Thereafter, each was allowed to sit at room temperature for not less than 24 hours. Thus, samples were prepared. The organic resin coated face of each obtained sample was mountain-folded to 180°, and a load of 1 kg was applied. After sitting for one hour at 25°C, the appearance of the film at the folding site was visually observed. Note that for the solvent-based film-forming polyurethane compositions, a mixture was used comprising 2 parts of a polyisocyanate-based crosslinking agent (Coronate L) per 100 parts of the polyurethane composition. Evaluation results are shown in Table 1.

### Evaluation of elongation of the film-forming organic resin

Each film-forming organic resin composition was applied on a polyester film by knife coating. The film-forming water-based emulsions were allowed to sit at rest for 30 minutes at 80°C and the solvent-based film-forming compositions were allowed to sit at rest for 30 minutes at 120°C. Thereafter, organic resin films having a thickness from 20 to 30 µm were obtained by peeling the cured film from the polyester film. The obtained organic resin films were formed into strips having a width of 10 mm, and breaking elongation when stretched at a pulling speed of 10 mm/minute was measured. Note that for the solvent-based film-forming polyurethane compositions, a mixture was used comprising 2 parts of a polyisocyanate-based crosslinking agent (Coronate L) per 100 parts of the polyurethane composition. Evaluation results are shown in Table 1.

**Table 1**

| | Flexibility | Elongation (%) |
|---|---|---|
| Binder A | No problems | 1400 |
| Binder B | No problems | 690 |
| Binder C | No problems | 850 |
| Binder D | White turbidity and cracking observed | 60 |
| Binder E | White turbidity and cracking observed | 10 |
| Binder F | No problems | 250 |
| Binder G | No problems | 950 |
| Binder H | No problems | 1200 |

The film-forming organic resins shown in Table 1 are described below.
Binder A: Film-forming aqueous ester-based polyurethane emulsion (solid content: 48%, viscosity: 500 mPa·s)
Binder B: Film-forming water-based carbonate-based polyurethane emulsion (solid content: 42%, viscosity: 200 mPa·s)
Binder C: Film-forming solvent-based ester-based polyurethane composition (solid content: 20%, viscosity: 19,000 mPa·s)
Binder D: Film-forming water-based ester-based polyurethane emulsion (solid content: 34%, viscosity: 200 mPa·s)
Binder E: Film-forming solvent-based ester-based polyurethane composition (solid content: 70%, viscosity: 4,600 mPa·s)
Binder F: Mixture of Binder A and Binder D at a 1:1 ratio (film-forming water-based ester-based polyurethane emulsion) (solid content: 40%, viscosity: 320 mPa·s)
Binder G: Film-forming water-based polyacrylic resin emulsion (solid content: 60%, viscosity: 500 mPa·s)
Binder H: Film-forming water-based polyolefin emulsion (solid content: 32%, viscosity: 200 mPa·s)
Coronate L: Polyisocyanate-based crosslinking agent (contains 25% ethyl acetate as a solvent)

### Practical Examples 1 to 3, 5 to 8, and 11 to 14, and Comparative Examples 1 to 3 and 5 to 10

The film-forming organic resin and ion exchanged water were mixed at the compounding ratios shown in Tables 2 to 5. Then, a solid lubricant, a silicone component, and a surfactant were added at the compounding ratios shown in Tables 2 to 5 while stirring. Glass beads having a diameter of 2 mm were added to the obtained mixture, the mixture was then mixed for 30 minutes at 1,200 rpm using a propeller mixer and, thereafter, the glass beads were removed. Thus, the coating composition was obtained. Uniformity of the obtained coating composition was evaluated; and the dynamic coefficient of friction, occurrence of stick-slip, and sticking of the object covered with the coating composition to glass were evaluated. These results are shown in Tables 6 to 9.

### Practical Examples 4, 9, and 10, and Comparative Example 4

The film-forming organic resin, a solvent, and a crosslinking agent were mixed at the compounding ratios shown in Tables 2 to 4. Then, a solid lubricant, a silicone component, and a surfactant were added at the compounding ratios shown in Tables 2 to 4 while stirring. Thus, the coating composition was obtained. Uniformity of the obtained coating composition was evaluated; and the dynamic coefficient of friction, occurrence of stick-slip, and sticking of the object covered with the coating composition to glass were evaluated. These results are shown in Tables 6 to 8.

### Practical Example 15

As a result of testing the sliding durability of the object covered with the coating composition having the formulation shown in Practical Example 1 of Table 2, it was found that a low dynamic coefficient of friction of 0.42 with respect to the glass ball was maintained even after sliding 10,000 times, and that no peeling of the film of the sliding part was observed. Moreover, stick-slip did not occur during sliding.

### Practical Example 16

As a result of testing the sliding durability of the object covered with the coating composition having the formulation shown in Practical Example 4 of Table 2, it was found that a low dynamic coefficient of friction of 0.56 with respect to the glass ball was maintained even after sliding 10,000 times, and that no peeling of the film of the sliding part was observed. Moreover, stick-slip did not occur during sliding.

### Practical Example 17

As a result of testing the sliding durability of the object covered with the coating composition having the formulation shown in Practical Example 12 of Table 3, it was found that a low dynamic coefficient of friction of 0.30 with respect to the glass ball was maintained even after sliding 10,000 times, and that no peeling of the film of the sliding part was observed. Moreover, stick-slip did not occur during sliding.

### Comparative Example 11

As a result of testing the sliding durability of the object covered with the coating composition having the formulation shown in Comparative Example 1 of Table 4, it was found that the dynamic coefficient of friction increased to 0.58 with respect to the glass ball after sliding 10,000 times, and that partial peeling of the film of the sliding part was observed. Note that, however, stick-slip did not occur during sliding.

### Comparative Example 12

As a result of testing the sliding durability of the object covered with the coating composition having the formulation shown in Comparative Example 4 of Table 4, it was found that the dynamic coefficient of friction increased to 0.89 with respect to the glass ball after sliding 10,000 times, and that partial peeling of the film of the sliding part was observed. Note that, however, stick-slip did not occur during sliding.

### Comparative Example 13

As a result of testing the sliding durability of the object covered with the coating composition having the formulation shown in Comparative Example 10 of Table 5, it was found that the dynamic coefficient of friction increased to 0.59 with respect to the glass ball after sliding 10,000 times, and that partial peeling of the film of the sliding part was observed. Moreover, stick-slip occurred during sliding.

**Table 2**

| | | Practical Examples | | | | | |
|---|---|---|---|---|---|---|---|
| | | 1 | 2 | 3 | 4 | 5 | 6 |
| Film-forming organic resin (solid content) | Binder A | 100 | 100 | 100 | 0 | 100 | 0 |
| | Binder B | 0 | 0 | 0 | 0 | 0 | 100 |
| | Binder C | 0 | 0 | 0 | 100 | 0 | 0 |
| Crosslinking agent (solid content) | Coronate L | 0 | 0 | 0 | 12 | 0 | 0 |
| Solid lubricant | Graphite | 77 | 56 | 98 | 79 | 35 5 | 77 |
| | Molybdenum disulfide | 0 | 0 | 0 | 0 | 0 | 0 |
| | PTFE powder | 0 | 0 | 0 | 0 | 0 | 0 |
| Silicone component | silicone resin powder | 23 | 33 | 10 | 23 | 10 | 23 |
| Surfactant | 67 additive | 6 | 6 | 6 | 0 | 4 | 6 |
| Solvent | Distilled water | 902 | 860 | 963 | 0 | 654 | 902 |
| | Methyl isobutyl ketone | 0 | 0 | 0 | 0 | 0 | 0 |
| | Ethyl acetate | 0 | 0 | 0 | 898 | 0 | 0 |
| Silicone resin/Solid lubricant ratio | | 0.30 | 0.59 | 0.11 | 0.29 | 0.29 | 0.30 |

**Table 3**

| | | Practical Examples | | | | | | | |
|---|---|---|---|---|---|---|---|---|---|
| | | 7 | 8 | 9 | 10 | 11 | 12 | 13 | 14 |
| Film-forming organic resin | Binder A | 100 | 100 | 0 | 0 | 100 | 0 | 0 | 30 |
| | Binder B | 0 | 0 | 0 | 0 | 0 | 0 | 0 | 0 |
| | Binder C | 0 | 0 | 100 | 100 | 0 | 0 | 0 | 0 |
| | Binder F | 0 | 0 | 0 | 0 | 0 | 100 | 0 | 0 |
| | Binder G | 0 | 0 | 0 | 0 | 0 | 0 | 100 | 0 |
| | Binder H | 0 | 0 | 0 | 0 | 0 | 0 | 0 | 70 |
| Crosslinking agent (solid content) Solid lubricant | Coronate L | 0 | 0 | 12 | 12 | 0 | 0 | 0 | 0 |
| | Graphite | 106 | 0 | 0 | 79 | 117 | 77 | 77 | 77 |
| | Molybdenum disulfide | 0 | 42 | 0 | 0 | 0 | 0 | 0 | 0 |
| | PTFE powder | 0 | 0 | 79 | 0 | 0 | 0 | 0 | 0 |
| Silicone component | Silicone resin powder | 29 | 10 | 23 | 0 | 23 | 23 | 23 | 23 |
| | Silicone resin | 0 | 0 | 0 | 23 | 0 | 0 | 0 | 0 |
| Surfactant | 67 additive | 6 | 6 | 0 | 0 | 6 | 6 | 6 | 6 |
| Solvent | Distilled water | 1060 | 733 | 0 | 0 | 975 | 850 | 1128 | 750 |
| | Methyl isobutyl ketone | 0 | 0 | 233 | 0 | 0 | 0 | 0 | 0 |
| | Ethyl acetate | 0 | 0 | 642 | 874 | 0 | 0 | 0 | 0 |
| Silicone resin/Solid lubricant ratio | | 0.27 | 0.25 | 0.29 | 0.29 | 0.2 | 0.3 | 0.3 | 0.3 |

**Table 4**

| | | Comparative Examples | | | | | |
|---|---|---|---|---|---|---|---|
| | | 1 | 2 | 3 | 4 | 5 | 6 |
| Film-forming organic resin (solid content) | Binder A | 100 | 100 | 100 | 0 | 100 | 100 |
| | Binder C | 0 | 0 | 0 | 100 | 0 | 0 |
| Crosslinking agent (solid content) | Coronate L | 0 | 0 | 0 | 12 | 0 | 0 |
| Solid lubricant | Graphite | 77 | 56 | 98 | 79 | 117 | 0 |
| | Molybdenum disulfide | 0 | 0 | 0 | 0 | 0 | 0 |
| | PTFE powder | 0 | 0 | 0 | 0 | 0 | 0 |
| component Silicone component | Silicone resin powder Silicone rubber | 0 | 0 | 0 | 0 | 0 | 67 |
| | powder | 23 | 33 | 10 | 23 | 0 | 0 |
| Surfactant | 67 additive | 6 | 6 | 6 | 0 | 6 | 4 |
| Solvent | Distilled water | 902 | 860 | 944 | 0 | 975 | 754 |
| | Methyl isobutyl ketone | 0 | 0 | 0 | 0 | 0 | 0 |
| | Ethyl acetate | 0 | 0 | 0 | 898 | 0 | 0 |
| Silicone resin/Solid lubricant ratio | | 0 | 0 | 0 | 0 | 0 | - |

**Table 5**

| | | Comparative Examples | | | |
|---|---|---|---|---|---|
| | | 7 | 8 | 9 | 10 |
| Film-forming organic resin | Binder A | 100 | 100 | 100 | 0 |
| | Binder F | 0 | 0 | 0 | 100 |
| Solid lubricant | Graphite | 0 | 19 | 77 | 77 |
| | Molybdenum disulfide | 0 | 0 | 0 | 0 |
| | PTFE powder | 0 | 0 | 0 | 0 |
| Silicone component | Silicone resin powder | 0 | 0 | 0 | 0 |
| | Silicone rubber powder | 67 | 0 | 0 | 23 |
| Surfactant | 67 additive | 4 | 6 | 6 | 6 |
| Solvent | Distilled water | 754 | 540 | 902 | 850 |
| | Methyl isobutyl ketone | 0 | 0 | 0 | 0 |
| | Ethyl acetate | 0 | 0 | 0 | 0 |
| Silicone resin/Solid lubricant ratio | | - | 0 | 0 | 0 |

**Table 6**

| | | | Practical Examples | | | | | |
|---|---|---|---|---|---|---|---|---|
| Base material | Sliding material | | 1 | 2 | 3 | 4 | 5 | 6 |
| CR | Steel | Coefficient of friction | 0.26 | 0.59 | 0.31 1 | 0.58 | 0.32 | 0.34 |
| | ball | Stick-slip | None | None | None | None | None | None |
| CR | | Coefficient of friction | 0.28 | 0.25 | 0.25 | 0.31 | 0.3 | 0.26 |
| | POM | Stick-slip | None | None | None | None | None | None |
| CR Glass | | Coefficient of friction | 0.34 | 0.65 | 0.56 | 0.59 | 0.56 | 0.35 |
| | | Stick-slip | None | None | None | None | None | None |
| EPDM | Steel | Coefficient of friction | 0.38 | 0.59 | 0.44 | 0.54 | 0.48 | 0.35 |
| | ball | Stick-slip | None | None | None | None | None | None |
| EPDM | | Coefficient of friction | 0.28 | 0.26 | 0.35 | 0.27 | 0.35 | 0.27 |
| | POM | Stick-slip | None | None | None | None | None | None |
| EPDM | Glass | Coefficient of friction | 0.51 | 0.57 | 0.52 | 0.6 | 0.54 | 0.41 |
| | | Stick-slip | None | None | None | None | None | None |
| Coating dispersibility | | | Pass | Pass | Pass | Pass | Pass | Pass |
| Glass sticking (seconds) | | | 0 | 0 | 32 | 0 | 0 | 0 |

**Table 7**

| | | | Practical Examples | | | | | | | |
|---|---|---|---|---|---|---|---|---|---|---|
| Base material | Sliding material | | 7 | 8 | 9 | 10 | 11 | 12 | 13 | 14 |
| CR | Steel ball | Coefficient of friction of | 0.41 | 0.31 | 0.32 | 0.53 | 0.27 | 0.25 | 0.24 | 0.18 |
| | | Stick-slip | None | None | None | None | None | None | None | None |
| CR | POM | Coefficient of friction | 0.24 | 0.29 | 0.23 | 0.29 | 0.27 | 0.18 | 0.2 | 0.15 |
| | | Stick-slip | None | None | None | None | None | None | None | None |
| CR | Glass | Coefficient of friction | 0.51 | 0.41 | 0.39 | 0.56 | 0.41 | 0.22 | 0.26 | 0.2 |
| | | Stick-slip | None | None | None | None | None | None | None | None |
| EPDM | Steel ball | Coefficient of friction | 0.41 | 0.41 | 0.26 | 0.22 | 0.39 | 0.23 | 0.22 | 0.2 |
| | | Stick-slip | None | None | None | None | None | None | None | None |
| EPDM POM | | Coefficient of friction | 0.28 | 0.35 | 0.28 | 0.34 | 0.25 | 0.15 | 0.25 | 0.19 |
| | | Stick-slip | None | None | None | None | None | None | None | None |
| EPDM | Glass | Coefficient of friction | 0.51 | 0.45 | 0.37 | 0.59 | 0.39 | 0.21 | 0.18 | 0.23 |
| | | Stick-slip | None | None | None | None | None | None | None | None |
| Coating dispersibility | | | Pass | Pass | Pass | Pass | Pass | Pass | Pass | Pass |
| Glass sticking (seconds) | | | 0 | 0 | 0 | 0 | 0 | 0 | 0 | 0 |

**Table 8**

| | | | Comparative Examples | | | | | |
|---|---|---|---|---|---|---|---|---|
| Base material | Sliding material | | 1 | 2 | 3 | 4 | 5 | 6 |
| CR | Steel ball | Coefficient of friction | 0.44 | 0.48 | 0.46 | 0.55 | 0.5 | 0.25 |
| | | Stick-slip | None | None | None | None | None | Occurred |
| CR | POM | Coefficient of friction | 0.35 | 0.38 | 0.48 | 0.45 | 0.42 | 0.29 |
| | | Stick-slip | None | None | None | None | None | None |
| CR | Glass | Coefficient of friction | 0.41 | 0.52 | 0.52 | 0.51 | 0.65 | 0.42 |
| | | Stick-slip | None | None | None | None | None | None |
| EPDM | Steel ball | Coefficient of friction | 0.36 | 0.5 | 0.7 | 0.51 | 0.34 | 0.25 |
| | | Stick-slip | None | None | None | None | None | Occurred |
| EPDM | POM | Coefficient of friction | 0.35 | 0.4 | 0.29 | 0.29 | 0.38 | 0.24 |
| | | Stick-slip | None | None | None | None | None | None |
| EPDM | Glass | Coefficient of friction | 0.38 | 0.57 | 0.79 | 0.49 | 0.52 | 0.39 |
| | | Stick-slip | None | None | None | None | None | None |
| Coating dispersibility | | | Pass | Pass | Pass | Pass | Pass | Pass |
| Glass sticking (seconds) | | | >300 | >300 | >300 | >300 | >300 | 0 |

**Table 9**

| | | | Comparative Examples | | | |
|---|---|---|---|---|---|---|
| Base material | Sliding material | | 7 | 8 | 9 | 10 |
| CR | Steel ball | Coefficient of friction | 0.78 | 0.95 | 0.53 | 0.43 |
| | | Stick-slip | Occurred | Occurred | None | Occurred |
| CR | POM | Coefficient of friction | 0.65 | 0.53 | 0.48 | 0.26 |
| | | Stick-slip | Occurred | None | None | None |
| CR | Glass | Coefficient of friction | 1.5 | 1.26 | 0.59 | 0.45 |
| | | Stick-slip | Occurred | Occurred | None | Occurred |
| EPDM | Steel ball | Coefficient of friction | 0.48 | 0.63 | 0.49 | 0.46 |
| | | Stick-slip | Occurred | Occurred | None | Occurred |
| EPDM | POM | Coefficient of friction | 0.65 | 0.56 | 0.42 | 0.23 |
| | | Stick-slip | Occurred | None | None | None |
| EPDM | Glass | Coefficient of friction | 1.22 | 1.14 | 0.54 | 0.43 |
| | | Stick-slip | Occurred | Occurred | None | Occurred |
| Coating dispersibility | | | Pass | Pass | Pass | Pass |
| Glass sticking (seconds) | | | >300 | >300 | >300 | >300 |

The terminology used in Tables 2 to 9 is explained below.
Binders A to C and F to H: As described above.
Coronate L: Polyisocyanate-based crosslinking agent (contains 25% ethyl acetate as a solvent)

Graphite: Squamous graphite having a median diameter measured using a laser diffraction/scattering type particle size distribution of 3 to 5 µm.
Molybdenum disulfide: Molybdenum disulfide fine powder having a median diameter measured using a laser diffraction/scattering type particle size distribution of 3 to 6 µm. PTFE powder: Polytetrafluoroethylene resin powder having a median diameter measured using a laser diffraction/scattering type particle size distribution of 2 to 4 µm.
Silicone resin powder: Irregular shape silicone resin powder constituted by siloxane units expressed by (CH₃)SiO_{3/2}, having a median diameter measured using a laser diffraction/scattering type particle size distribution of 3 µm, and not having a softening point. Silicon-bonded hydroxyl groups content: 5%; Specific gravity: 1.33.
Silicone resin: Silicone resin expressed by the average unit formula ((CH₃)SiO_{3/2})_{0.86}((CH₃)₂SiO_{2/2})_{0.14}, having a glass transition temperature of 0°C. Silicon-bonded hydroxyl groups content: about 1%; Specific gravity: 1.05.
Silicone rubber powder: A spherical silicone rubber powder having a median diameter measured using a laser diffraction/scattering type particle size distribution of 2 µm, obtained by crosslinking a polydimethyl siloxane via a condensation reaction. Specific gravity: 0.98. 67 additive: (tradename) manufactured by Dow Corning Toray Co.,Ltd.

CR: Chloroprene rubber (crosslinked product; Purchased from Kanda Gomu Kagaku Corporation)
EPDM: Crosslinked product of an ethylene propylene diene monomer (purchased from Kanda Gomu Kagaku Corporation)
POM: Polyacetal resin

In Tables 2 to 5, "silicone resin/solid lubricant ratio" indicates the quotient of the parts of the silicone resin powder and silicone resin with respect to 100 parts of the film-forming organic resin (solid content) in each coating composition, divided by the parts of the solid lubricant.

### INDUSTRIAL APPLICABILITY

The coating composition of the present invention can be suitably used as a surface coating on weather strips of vehicle openings, vehicle wiper blade rubber, weather seals, glass runs, and similar sliding members because a film formed by curing the coating composition maintains a low frictional drag over an extended period of time, and because sticking to glass, metal coated surfaces, and similar smooth surfaces can be prevented. Moreover, the coating composition of the present invention can be suitably used for treating O-rings, gaskets, various types of packings, and other sealing members; and also sliding sites of surfaces of rubber hoses.

## Claims

1. A coating composition for a sliding member comprising: a film-forming organic resin, a solid lubricant, and a silicone resin.

2. The coating composition for a sliding member of claim 1, wherein from 30 to 120 parts by weight of the solid lubricant and from 5 to 80 parts by weight of the silicone resin are included per 100 parts by weight of the film-forming organic resin.

3. The coating composition for a sliding member of claim 1 or 2, wherein a weight ratio of the silicone resin to the solid lubricant is in a range from 0.1 to 0.8.

4. The coating composition for a sliding member of any one of claims 1 to 3, wherein the silicone resin has from 0.05 wt.% to 15 wt.% of silicon-bonded hydroxyl groups.

5. The coating composition for a sliding member of any one of claims 1 to 4, wherein the silicone resin is a silicone resin powder that does not have a softening point.

6. The coating composition for a sliding member of any one of claims 1 to 5, wherein a breaking elongation at a pulling speed of 10 mm/minute of an organic resin film, obtained from the film-forming organic resin, having a thickness of from 20 to 30 µm and a width of 10 mm is not less than 100%.

7. The coating composition for a sliding member of any one of claims 1 to 6, wherein the sliding member, which is a base material, is rubber.

8. A coated body provided with a coating film comprising a coating composition for a sliding member described in any one of claims 1 to 6 on a surface thereof.

9. A rubber member provided with a coating film comprising a coating composition for a sliding member described in claim 7 on a surface thereof.
